# EUROPEAN PATENT SPECIFICATION

(11) **EP 4 530 523 B1**
(45) Date of publication and mention of the grant of the patent: **23.09.2026**
(21) Application number: 23200163.6
(22) Date of filing: 27.09.2023
(51) Int. Cl.: F21S 41/24, F21V 8/00

(54) **METHOD FOR MODIFYING A LIGHT-INPUT SURFACE OF A LIGHTGUIDE**
VERFAHREN ZUR MODIFIZIERUNG EINER LICHTEINKOPPELFLÄCHE EINES LICHTLEITERS
PROCÉDÉ DE MODIFICATION D'UNE SURFACE D'ENTRÉE DE LUMIÈRE D'UN GUIDE DE LUMIÈRE

(43) Date of publication of application: 02.04.2025
(73) Proprietor: Hella Autotechnik Nova, s.r.o., 78985 Mohelnice (CZ)
(72) Inventor: Hasek, Michal, 789 83 Lostice (CZ); Hradil, Milan, 779 00 Olomouc (CZ); Kutac, Martin, 78985 Mohelnice (CZ); Tucek, Pavel, 779 00 Olomouc (CZ)
(74) Representative: Behr-Wenning, Gregor

(56) References cited:
- EP-A1- 1 746 339
- DE-A1- 102012 111 313
- FR-A1- 3 023 901

## Description

### Technical field

The present invention relates to lightguides, i.e., to elements for distributing light from a light source along a predefined path and outputting the light in a desired direction. It especially relates to lightguide for automotive lamps, especially headlamps or taillamps, but also any other kind of both interior and exterior lighting devices for vehicles.

### Background of the Invention

Lightguides are very common components of vehicle lamps. They are made from a translucent material, most often from a clear polymer such as PMMA or polycarbonate. Commonly used lightguides in automotive industry are thin lightguides with a substantially constant cross section, e.g., circular cross section, potentially flattened at one side. Light sources are commonly provided at one end or both ends of a lightguide, such that they illuminate the end surface(s) of the lightguide forming a light-input surface (also called simply input surface, entry surface, light-entry surface, coupling or incoupling surface, light-coupling or light-incoupling surface etc.).

A portion of the light provided by the light-source (e.g., a LED) is always wasted because the light-input surface always reflects a small portion of the light, so this portion does not enter into the lightguide and cannot be utilized. Making this wasted portion as small as possible is thus a desirable goal since it would increase the overall effectiveness of the resulting lamp.

A known way of increasing the light-entrance efficiency is making the input surface lens-shaped, e.g., convex, concave or in a freeform lens shape. This however significantly increases complexity of manufacturing the lightguide, because such an optically shaped surface is much more difficult to produce than a simple planar shape. Since each different light source has different parameters (beam angle, intensity, heat radiation, optimal distance from lightguide etc.), a different form of this optically shaped surface is needed for each different type of light source. This means that a different mold for making a corresponding lightguide has to be provided for each light source approved for use in given factory or production facility. For example, there can be a dozen different types of LEDs approved for use in vehicle lamps in a given manufacturing facility, and each of these LEDs then needs to have its specific lightguide with a specific freeform entry surface and thus its specific (and very expensive) molding form.

Another way is to make the input surface larger such that it can admit more light. This necessarily makes the whole lightguide larger, which is undesirable since space in vehicle lamps is always limited, and it also makes the manufacture more complex and thus more expansive.

It would therefore be desirable to provide a lightguide or a way for producing lightguides, such that the efficiency of the light input at the input surface of the lightguide would be increased.

DE 10 2012 111313 A1 discloses a lightguide for automotive lighting, comprising a light-input surface provided with a Fresnel lens.

### Summary of the Invention

The shortcomings of the solutions known in the prior art are to some extent eliminated by a method for modifying a light-input surface of a lightguide for automotive lighting. The method comprises the steps of:
- Obtaining a lightguide having a planar light-input surface. Preferably the input surface is at an end of the lightguide, i.e., it's shaped according to the lightguide's cross-section. The lightguide can have multiple input surfaces which can be modified as described herein.
- Obtaining at least one parameter of a light source intended for providing light to the lightguide. These parameters can be determined (e.g., observed, measured, designed, read in a corresponding datasheet, etc.) by a skilled person based on the intended application of the light source and the lightguide. E.g., a low-beam module requires different characteristics of the provided light than a high-beam module or than rear lamp or than a turn signal. Similarly, a motorcycle has different requirements for lamps than automobile etc. Production documentation for a specific vehicle lamp or its part can be a source of these parameters, as well as technical datasheet for a specific chosen light source or a general knowledge of one skilled in the art and accustomed to working on vehicle lighting with such light sources.
- Reshaping at least a part of the light-input surface of the lightguide by providing micro-optical elements to the surface part. This reshaping can include reheating of the lightguide or its part, in can include application of pressure and/or removal of material (e.g., cutting or polishing etc.).

At least one characteristic of the micro-optical elements is at least partially based on the at least one light source parameter for increasing the amount of light coupled into the lightguide and carried by the lightguide when its reshaped light-input surface is illuminated by the light source. In other words, the elements are designed such that less light is wasted during use of the resulting vehicle lamp. More light is thus coupled into the lightguide through the reshaped surface and/or this light is preprocessed by the surface such that more of it can be effectively used by the lightguide or by subsequent illumination component (lens, reflectors, other lightguides etc.). This can be done e.g., by inclining individual micro-optical elements such that they reflect less of the incoming light so that more light passes through the input surface and into the lightguide.

Especially towards the edges of the lightguide, assuming the light source is centered with respect to the (axis of) the lightguide, which it usually is, the angle of incidence of light rays on a flat input surface can be so large that a total reflection occurs, and the light is thus not passed into the lightguide. The reshaping with micro-optical elements can locally change the inclination and thus the angle to limit the amount of reflected light. The central part of the input surface, on the other hand, can have light incoming substantially perpendicularly to its surface (e.g., the angle of incidence is close to zero), and thus can be left without any reshaping.

The light source can be formed by multiple individual sub-sources, e.g., it can be an array of LEDs. Different micro-optical elements can then process light from different sub-sources or can receive more light from some sub-sources than from others. Even then, the light-source is preferably centered with respect to the lightguide's optical axis, i.e., the array of LEDs as a whole can be centered, even though individual LEDs are not.

Thanks to method, standard lightguides with planar input surfaces, which are relatively cheap to make, and which are universally usable with many different types of light sources, can be produced. When a specific light source is then chosen for a concrete application, e.g., for a new line of headlamp modules utilizing a specific kind of LED from a specific manufacturer, there is no need to modify the machines producing the (non-modified) lightguides. The standard flat-surfaced lightguides can be modified by the method and used for the specific application with increased efficiency and with comparatively smaller cost when compared e.g., with making the specifically shaped lightguides from the scratch in newly designed injection molding forms specifically designed for the chosen LEDs.

The machinery for the reshaping can e.g., include only a lightguide-holding articulated arm, heat source (e.g., a laser) and a stamp or insert with a negative imprint of the desired micro-optical elements. The arm heats the input surface, presses it against the insert and the reshaping is complete. For different applications with different light sources and thus different requirements of the input surface shape, only the insert can be changed (or alternatively only a program defining CNC machining of the input surface needs to be changed) - this again is substantially cheaper than a new molding form. As a result, lightguides with a specific input surface shape, which shape incouples light with at least comparable efficiency to freeform input surfaces, can be produced much cheaper. A production facility can then produce the universal flat-surfaced lightguides as intermediate products, and then reshape these universal lightguides in different manufacturing lines according to the desired application and the intended light source. Significant advantage of this method is also in that it can use known plane-surfaced lightguides and reshape them for any desired application, so implementing this method into a current manufacturing process or facility is less of a burden.

The at least one characteristic of the micro-optical elements can be selected from a set containing: a shape of the elements, a size of the elements, a location of the elements on the light-input surface, a number of the elements, and an orientation of the elements or their parts. These characteristics can be outputted by a modelling software based on the provided light source parameters and/or on other parameters (reflecting the light source parameters) determined by operators. Individual elements can be individually shaped, based on their position on the input surface and thus by their relative position with respect to the light source. Elements can also be grouped, and these groups (e.g., containing elements located at a certain smaller part of the surface) can share some or all of the characteristics.

At least some of the micro-optical elements can be shaped for decreasing an angle of incidence of rays provided by the intended light source. This can be a practical way of increasing the efficiency of the resulting lamp since the angle of incidence (measured from a normal to the input surface at the point of incidence) determines if the incoming rays get reflected or not. This angle does not necessarily have to be the only parameter which is considered. For example, if a ray of light passes through the input surface (through entry portion of a specific micro-optical element), but it is directed towards the side surface of the lightguide with an incidence angle so small, that total internal reflection (TIR) cannot occur, then this ray leaves the lightguide and is likely wasted, even though it was successfully passed into the lightguide. The local surface angle of the micro-optical element can thus also be designed with this situation in mind - it should pass the rays through but at the same time also direct them at a small enough angle relative to the lightguide's axis such that the TIR can occur, and the rays can be successfully carried by the lightguide towards its output surface. The output surface can be at the opposite end of the lightguide, it can be along its side (e.g., with outcoupling elements on the opposite side), etc.

Similarly, the micro-optical elements can also increase homogeneity of the light - this again is a feature of known modelling software tools, and a skilled person can thus use such a software to design micro-optical elements for the input surface or its parts which satisfy any desired criteria, e.g., increase homogeneity while increasing efficiency by limiting reflection of light on the input surface.

The light-input surface is preferably located at an end of the lightguide, wherein axis of the lightguide passes through the light-input surface. For a general thin lightguide commonly usen in vehicle lamps, this arrangement is the most suitable, since the light passes into the lightguide substantially in parallel with the axis, and the direction of the axis is the direction in which the light is supposed to travel through the lightguide.

The light-input surface can have a central part and a peripheral part, wherein the micro-optical elements are located on the peripheral part. The central part can then be left unmodified, i.e., without any micro-optical elements. As described above, the peripheral or edge parts have higher tendency to reflect light and thus it is desirable to modify them while the central part is aligned with the light source and can thus be left planar. It is however possible to provide the micro-optical elements on the whole surface or on different parts of the surface than just the peripheral parts.

The reshaping can include at least one of the following: heating the material forming the light-input surface, removing part of the material forming the light-input surface (this can be done in combination with the heating), pressing the light-input surface against a shaped insert (this can also be done in combination with the heating).

The at least one light source parameter, which has impact on the element characteristics, can include at least one of the following: an intended distance between the light source and the light-input surface, a luminous intensity of the light source, a beam angle of the light source, an efficiency of the light source, and a size of the light source or of its light-emitting portion. Alignment between the light source and the light-input surface can be another parameter, but since the light source is placed in the lightguide's axis in most cases, this parameter would remain constant for most standard applications and can thus be omitted.

The distance is closely related to the beam angle, since they both directly impact the incidence angles of the light rays produced by the light source. Intensity (i.e., measured as illuminance or brightness, e.g., measured in lux at a predefined distance or in lumens per unit angle of the light source's beam) usually has an impact on produced heat, which in turn can require a certain distance between the light source and the lightguide in order to prevent thermal degradation of the lightguide's material. Similarly, efficiency of the light source has impact on the produced heat. The size of the light source, or more precisely of its light-emitting portion, can also influence the beam angle. It can also influence how much the light needs to be spread out by the input surface or how much it needs to be narrowed, in order to be efficiently and homogenously carried by the lightguide.

Some or all of these parameters can thus be given/obtained for the indented light source and the micro-optics is then designed and produced accordingly.

At least some of the micro-optical elements can have at least one characteristic determined independently from some other micro-optical elements. As described above, the incidence angle is different at different positions on the input surface, so changing the inclination of the elements along the surface can be desirable. The light source can also have a different intensity at different portions of the surface, e.g., the intensity can be higher at the center than at the edges of the input surface. The elements closer to the edge/periphery can thus be shaped such that they balance this nonuniformity (e.g., they direct individual rays closer together) of the intensity and the light carried by the lightguide can thus again be more homogeneous.

Most of the micro-optical elements preferably have a length and/or a width smaller than or equal to 100 microns, more preferably smaller than or equal to 50 microns, more preferably smaller than or equal to 25 microns. The width and/or length is measured along the plane of the originaly planar input surface. A height of the elements is then the dimension perpendicular to this plane and can also be from the aforementioned intervals. The elements can have their width in the same order of magnitude as their length, e.g., they can be substantially circular or square-shaped. They can also have one microscopical dimension and other macroscopical dimension - e.g., teeth or ridges can have a width of 5-25 microns and length of several millimeters.

In general, the micro-optical elements can by any or all of the following: pillow shaped elements, micro lens (concave, convex, freeform), teeth, ridges, grooves, projections, mutually angled micro-surfaces, continuous waves on the surface etc. The size of at most 100 µm in at least one dimension (length or width) is preferred for the elements, because it provides a very fine local adjustment of the shape of the input surface, which in turn can provide better light coupling efficiency or can provide easier combining of multiple optical functions (e.g., efficiency as well as homogeneity) onto the surface. The small-sized elements also make it possible to provide basically any desired optical function while keeping the surface almost flat (since there are only micro-sized protrusions or recesses or other forms of micro-optical elements on the otherwise planar surface). This means that the reshaping of the input surface does not change distance of the surface to light source, lightguide holder, or other components, so the surrounding components can remain the same. However, it is possible to include larger elements as well.

A lightguide for an automotive lighting device (e.g., a headlight, taillight, illuminated grille or bumper, but also e.g., a turn signal or an interior lighting device, e.g., on a ceiling or dashboard) can be provided by the method according to the invention. The lightguide has a body with a planar light-input surface. The light-input surface is modified according to the method of the invention, wherein on the light-input surface, the lightguide is provided with micro-optical elements. At least one characteristic of the micro-optical elements is at least partially based on at least one light source parameter of a light source intended for use with the lightguide. This is for increasing the amount of light coupled into the lightguide and carried by the lightguide when the light-input surface is illuminated by the light source.

Advantages of this lightguide are as described above in relation to the method of the invention. Additional features of the lightguide can be provided by the method, i.e., optional and preferable features described above for the method can analogically be a part of the lightguide as well.

A vehicle lamp can comprise the lightguide made by the method according to the invention. It also comprises the light source intended for use with the lightguide, wherein the light source is directed towards the modified light-input surface.

### Description of drawings

A summary of the invention is further described by means of exemplary embodiments thereof, which are described with reference to the accompanying drawings, in which:
- Fig 1.: Shows a schematic drawing of an exemplary lightguide made by the method according to the present invention placed with its input surface towards a LED light source on a PCB;
- Fig 2.: Shows a schematic detailed drawing of an end of another exemplary lightguide, wherein the drawing includes a schematical depiction of several light rays emitted by an LED and coupled into the lightguide via its input surface with micro-optical elements (the size of the micro-optical elements is exaggerated in the drawings to make the individual elements discernible);
- Fig 3.: Schematically shows a perspective view of an end of a lightguide in another exemplary embodiment, wherein the lightguide's input surface has a flat central portion and four peripheral portions with micro-optics;
- Fig 4.: Schematically shows a drawing on the light-input surface of the lightguide from fig. 3;
- Fig 5.: Shows a picture of an exemplary light-input surface, wherein the micro-optical elements are elongated teeth similar to those from fig. 4;
- Fig 6.: Shows a detailed view of a part of the input surface from fig. 5;
- Fig 7.: Shows an even more detailed view of two micro-optical elements from the surface from figs. 5 and 6;
- Fig 8.: Shows a flowchart describing an embodiment of the method for modifying a light-input surface of a lightguide made by the method according to the invention.

### Exemplary Embodiments of the Invention

The invention will be further described by means of exemplary embodiments with reference to the respective drawings.

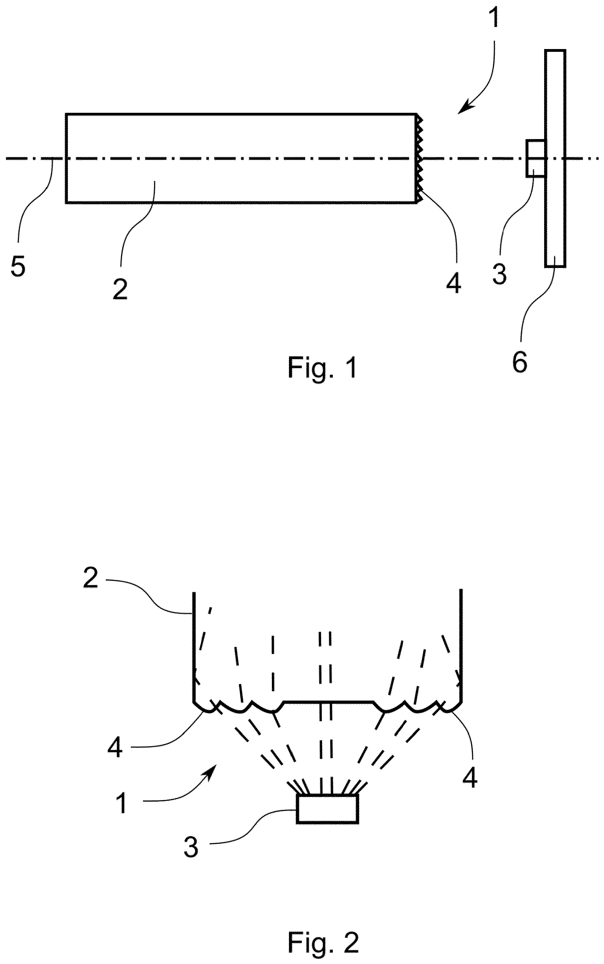

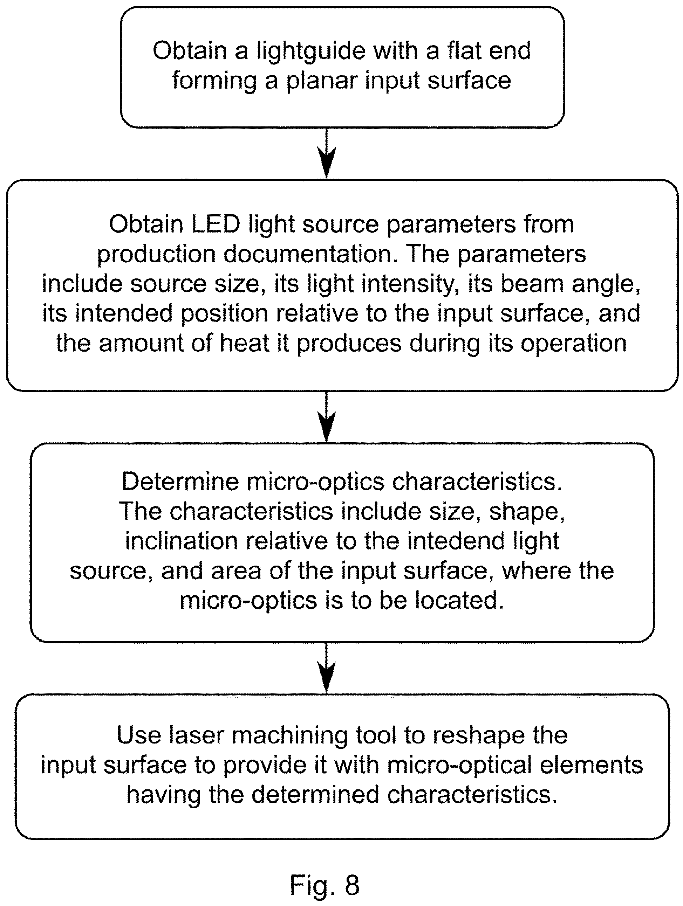

A first exemplary embodiment of the present invention is an embodiment of a method for modifying a light-input surface 1 of a lightguide 2 for automotive lighting summarized by the flowchart in fig. 8. The method comprises the following steps:
- Obtaining (e.g., producing, buying etc.) a lightguide 2 which has a planar light-input surface 1. This lightguide 2 can be a lightguide known from the state of the art. In the first embodiment, it is produced by injection molding from PMMA, but this production is not a part of the embodiment. The lightguide 2 in this embodiment is a thin lightguide with a substantially constant circular cross-section. The lightguide 2 has a straight axis 5, i.e., it is substantially cylindrical. The input surface 1 is on one end of the light, while on the other end is an output surface through which the light leaves the lightguide 2.
- Obtaining at least one parameter of a light source 3 intended for providing light to the lightguide 2. The parameter in this embodiment is obtained from the design of the lamp for which the lightguide 2 in intended, e.g., from a production documentation. In the first embodiment, the parameters are: position of the light source 3, such that its axis coincides with the axis 5 of the lightguide 2, and its intended distance from the input surface 1 (see fig. 1), size of the luminous portion of the LED forming the light source 3, beam angle of the LED and efficiency of the LED, i.e., how much heat it produces when it's on. The amount of heat has at least impact on minimal distance between the lightguide 2 and the light source 3.
- Reshaping a part of the light-input surface 1 of the lightguide 2 by providing this part with micro-optical elements 4. In the embodiment, the end of the lightguide 2 which contains the input surface 1 is machined by a laser. Characteristics of the micro-optical elements 4 are chosen based on the parameters of the light source 3 for the purpose of increasing the amount of light coupled into the lightguide 2 and carried by the lightguide 2 when its reshaped light-input surface 1 is illuminated by the light source 3.

These characteristics include shape of the elements and inclination of their individual entrance faces - the closer to the edge of the input surface 1 a micro-optical element 4 is, the more it is inclined with respect to the plane of the (non-modified) light-input surface 1 of the lightguide 2. The angle of incidence on this entrance face is thus closer to 90° so the light from the light source 3 is less likely to be reflected (and thus wasted).

This inclination is also affected by the intended direction of the light, once it is inside of the lightguide 2. If the light was directed towards the sides of the lightguide 2 at an angle that is too large, the light would simply pass through the sides out of the lightguide 2 (and would thus be wasted, just like the light reflected from the input surfaces 1). The inclination of the individual entrance faces thus takes this into account and is chosen such that the light rays passing therethrough can be carried by the lightguide 2 - i.e., can be totally internally reflected on its sides.

At the centre of the input surface 1, there is a square part which does not contain any micro-optical elements 4. The incidence angles on this part are close enough to 90° such that no micro-optical elements 4 are necessary here for the light to be efficiently passed through the surface. The periphery of the input surface 1 is divided into four sub-surfaces which have a common inclination of the micro-optical elements 4, at least to an extent. This is again due to the elements being shaped in order to let the light through more efficiently. All the elements of the left portion of the surface are thus more inclined (more precisely have their entrance faces more inclined) to the right, and analogically for the other peripheries.

Some of the micro-optical elements 4 are thus oriented independently from others, i.e., the elements of the top are inclined differently than the ones on the bottom etc. All the elements in the same sub-surface, on the other, share some characteristics - they are not all shaped and inclined the same, but they all share the fact that they are mainly oriented towards the light source 3.

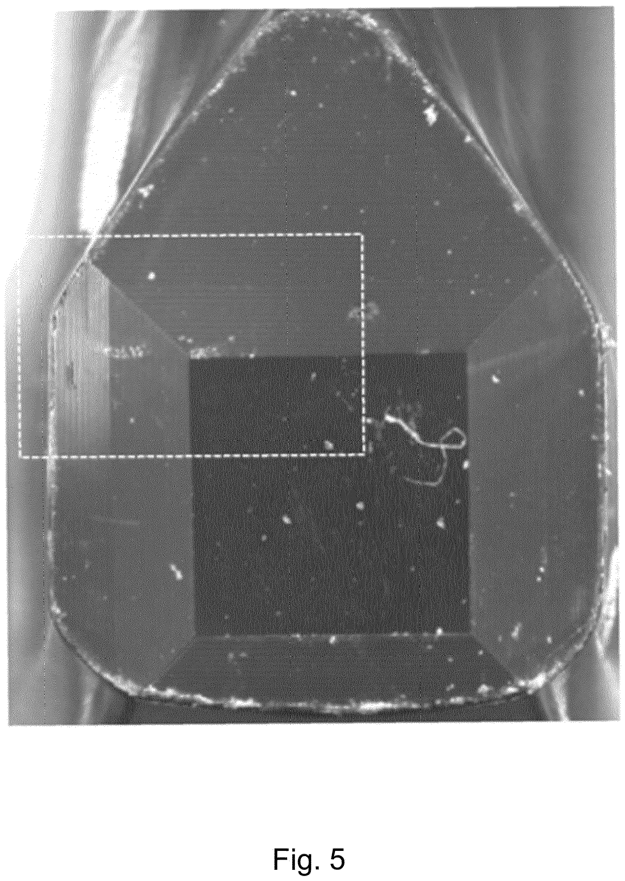

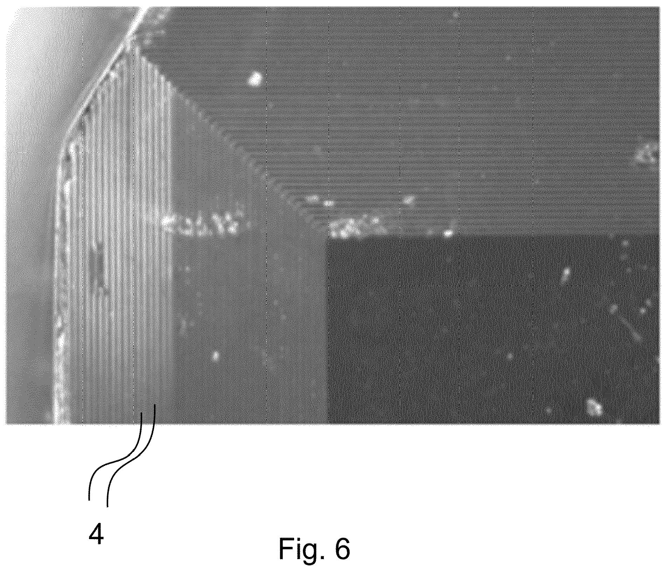

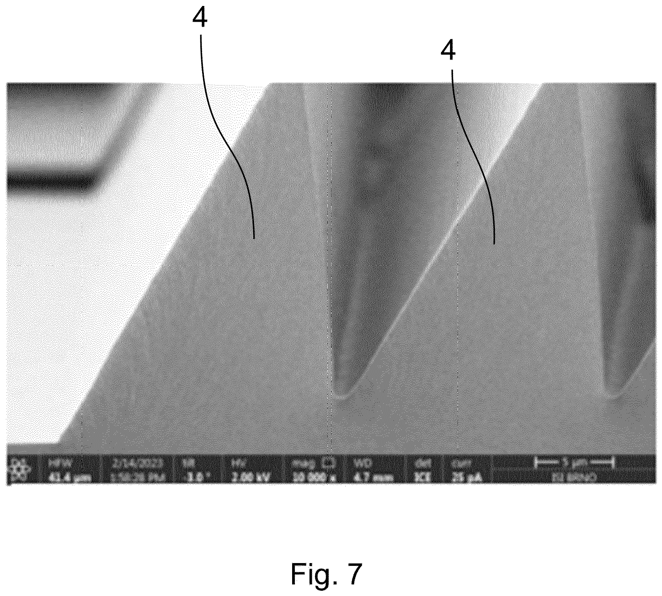

The micro-optical elements 4 in the first embodiment are teeth which have a length and width, which are dimensions perpendicular to each other and parallel to the plane of the unmodified light-input surface 1 of the original lightguide 2. The width in the embodiment is 5-10 microns. The length is the whole length of the respective sub-surface (see figs. 5 to 7 - figs. 5 and 6 show the arrangement of the teeth, fig. 7 shows a shape and size of cross-section of the teeth). From fig. 5, as well as figs. 3 and 4, it can also be seen that the characteristics in this embodiment define that a square central portion of the input surface 1 remains element-free, i.e., flat, while there are four edge portions provided with teeth - each edge portion differs from its neighbouring edge portion in direction of the teeth's length.

A step of determining these characteristics can be an individual step taking place before the reshaping (as it is in the first embodiment as can be seen in fig. 8). It can alternatively also be a part of the step of reshaping, or it can be done beforehand such that in the method, the characteristics are only obtained, e.g., also from the production documentation. The documentation can for example describe a number of light sources 3 to choose from (by a skilled person when designing a specific illumination device, e.g., a high beam module for a headlight). For each source, it can provide the parameters as well as the characteristics that the micro-optical elements 4 should have for this specific light source 3.

In the first embodiment, the determining is done by a computer modelling software - many such software tools are known to skilled persons. The modelling software takes as an input at least the position and beam angle of the light source 3 and the desired shape of the light beam once it is processed by the input surface 1 with the micro-optics - e.g., it is desired that as much light as possible gets coupled into the lightguide 2 and that the light carried by the light guide is as homogeneous as possible. The modelling software then provides one or more possible micro-optics configurations which can be used for the specific light source 3.

The lightguide 2 with modified input surface 1 produced by this method can then be used in an assembly of an illumination device. For example, a high-beam module is constructed, and the lightguide is incorporated therein.

A second exemplary embodiment of the present invention can be used to produce a lightguide 2 for an automotive lighting device. The lightguide 2 comprises a clear body, e.g., injection-moulded from glass, PC, PMMA or other known material. This lightguide 2 originaly has a planar input surface 1, but the surface was modified by the method of the invention, e.g., according to the first embodiment. The light-input surface 1 of the lightguide 2 is thus provided with micro-optical elements 4 which have their characteristics determined based on parameters of a light source 3 which is to be used with the lightguide 2.

In the second embodiment, the micro-optical elements 4 are teeth, as depicted in fig. 1. These teeth bend light from the light source 3 (e.g., an LED on a PCB 6) such that a smaller portion of the light gets reflected back on the input surface 1, when compared to the original flat surface. A skilled person, using their common general knowledge and their skill, can design many forms of the micro-optical elements 4 which would provide the improved efficiency of light-incoupling and which would also improve homogeneity of the light carried by the light guide. In this embodiment, the micro-optical elements 4 are provided on the whole input surface 1 and each of them is individually designed (by a software tool) for bending the incoming light from the light source 3 as needed.

A lightguide produced by a third embodiment is depicted in fig. 2. This embodiment also produces a lightguide 2 with a modified input surface 1. The difference between this embodiment and the second embodiment is in that the micro-optical elements 4 are pillow shaped, i.e., they are not sharp teeth but individual freeform round micro-optical elements. In this embodiment, there is a flat central portion on the input surface 1 and a ring-shaped edge area surrounding it and containing the micro-optics. Other features of this embodiment can be done as in the second embodiment.

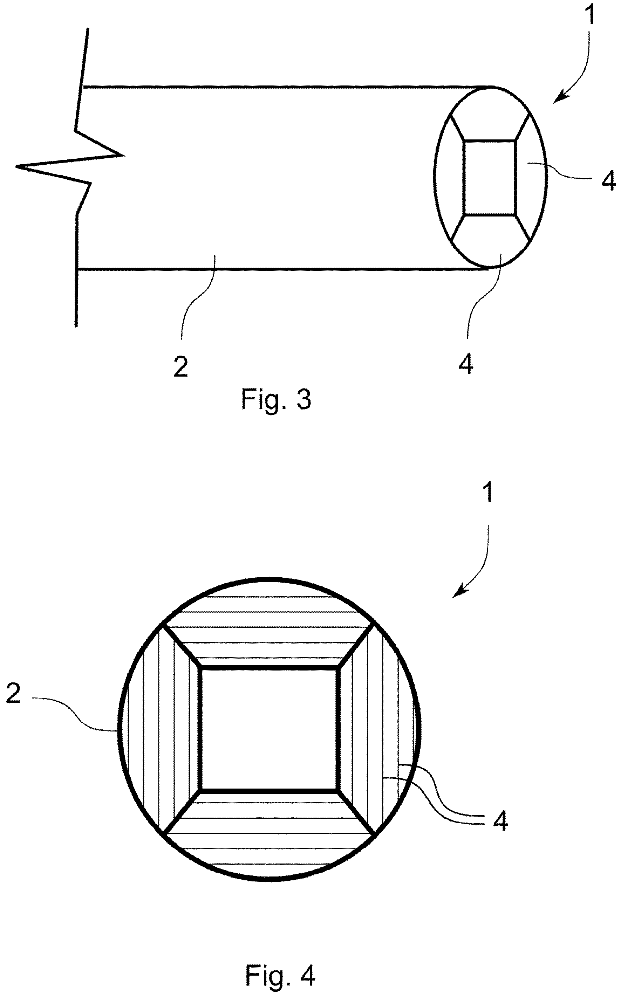

A lightguide produced by a fourth embodiment is illustrated in figs. 3 and 4. The lightguide 2 produced by this embodiment has the tooth on the input surface 1 exactly as described in the first embodiment above. The edge parts of the input surface 1 are approximately planar and co-planar with the planar central part, but since they have micro-optical elements 4 running in different directions, they are distinguishable from each other even by the naked eye. Other features of this embodiment can be as described above in the second embodiment.

A fifth embodiment of the invention is similar to the fourth embodiment - the lightguide has the same shape of the micro-optical elements 4. The only difference is in the cross-section of the lightguide 2 which is not circular in the fifth embodiment. The cross-section here is a pentagon with round corners which resembles a square with a triangle on top. This embodiment is depicted by the photographs in figs. 5, 6 and 7.

A vehicle lamp can comprise the lightguide 2 modified according to the invention. The lamp is for example a headlight with several modules - high beam, low beam, fog light, daytime running light etc. Several of these modules contain a LED light source 3 with the lightguide 2 produced by the method according to the invention. The lamp then has any further standard lamp components such as plastic carriers and covers, lens, actuators, control electronics and wiring, other lightguides and light sources etc.

In an alternative embodiment the cross section of the lightguide 2 changes periodically on one side of the lightguide 2 due to a presence on out-coupling elements - teeth, which direct the carried light towards the opposite surface of the lightguide 2, through which the light leaves the lightguide 2. In another embodiment, the method of the invention comprises also the step of producing the lightguide 2 with the planar input surface 1. In some embodiments, the step of designing the parameters of the light source 3 can also be a part of the method.

Instead of laser-machining the reshaping can be done, for example, by heating the end of the light guide defining the input surface 1 and then pressed against an insert which has a negative shape of the desired micro-optical elements 4.

### Reference list

- 1 -: Input surface
- 2 -: Lightguide
- 3 -: Light source
- 4 -: Micro-optical element
- 5 -: Axis
- 6 -: PCB

## Claims

1. Method for modifying a light-input surface (1) of a lightguide (2) for automotive lighting, the method comprising:
• Obtaining a lightguide (2) having a planar light-input surface (1);
• Obtaining at least one parameter of a light source (3) intended for providing light to the lightguide (2); and
• Reshaping at least a part of the light-input surface (1) of the lightguide (2) by providing micro-optical elements (4) to the surface part;
wherein at least one characteristic of the micro-optical elements (4) is at least partially based on the at least one light source (3) parameter for increasing the amount of light coupled into the lightguide (2) and carried by the lightguide (2) when its reshaped light-input surface (1) is illuminated by the light source (3).

2. The method according to claim 1 **wherein** the at least one characteristic of the micro-optical elements (4) is selected from a set containing: a shape of the micro-optical elements (4), a size of the micro-optical elements (4), a location of the micro-optical elements (4) on the light-input surface (1), a number of the micro-optical elements (4), and an orientation of the micro-optical elements (4) or their parts.

3. The method according to any of the preceding claims **wherein** at least some of the micro-optical elements (4) are shaped for decreasing an angle of incidence of rays provided by the intended light source (3).

4. The method according to any of the preceding claims **wherein** the light-input surface (1) is located at an end of the lightguide (2), wherein an axis (5) of the lightguide (2) passes through the light-input surface (1).

5. The method according to any of the preceding claims **wherein** the light-input surface (1) has a central part and a peripheral part, wherein the micro-optical elements (4) are located on the peripheral part.

6. The method according to any of the preceding claims **wherein** the reshaping includes at least one of the following: heating the material forming the light-input surface (1), removing part of the material forming the light-input surface (1), pressing the light-input surface (1) against a shaped insert.

7. The method according to any of the preceding claims **wherein** the at least one light source (3) parameter includes at least one of the following: an intended distance between the light source (3) and the light-input surface (1), a luminous intensity of the light source (3), a beam angle of the light source (3), an efficiency of the light source (3), and a size of the light source (3) or of its light-emitting portion.

8. The method according to any of the preceding claims **wherein** at least some of the micro-optical elements (4) have at least one characteristic determined independently from some other micro-optical elements (4).

9. The method according to any of the preceding claims **wherein** most of the micro-optical elements (4) have a length and/or a width smaller than or equal to 100 microns.

## Patentansprüche

1. Verfahren zur Modifizierung einer Lichteinkoppelfläche (1) eines Lichtleiters (2) für Automobilbeleuchtung, wobei das Verfahren Folgendes umfasst:
• Erhalten eines Lichtleiters (2), der eine ebene Lichteinkoppelfläche (1) aufweist;
• Erhalten mindestens eines Parameters einer Lichtquelle (3), die dazu vorgesehen ist, dem Lichtleiter (2) Licht bereitzustellen; und
• Umformen mindestens eines Teils der Lichteinkoppelfläche (1) des Lichtleiters (2) durch Bereitstellen mikrooptischer Elemente (4) für das Oberflächenteil;
wobei mindestens eine Eigenschaft der mikrooptischen Elemente (4) mindestens teilweise auf dem mindestens einen Parameter der Lichtquelle (3) zum Erhöhen der Menge von in den Lichtleiter (2) eingekoppeltem und durch den Lichtleiter (2) geleitetem Licht, wenn seine umgeformte Lichteinkoppelfläche (1) durch die Lichtquelle (3) beleuchtet wird, basiert.

2. Verfahren nach Anspruch 1, **wobei** die mindestens eine Eigenschaft der mikrooptischen Elemente (4) aus einer Gruppe ausgewählt wird, die Folgendes umfasst: eine Form der mikrooptischen Elemente (4), eine Größe der mikrooptischen Elemente (4), eine Position der mikrooptischen Elemente (4) auf der Lichteinkoppelfläche (1), eine Anzahl der mikrooptischen Elemente (4) und eine Ausrichtung der mikrooptischen Elemente (4) oder ihrer Teile.

3. Verfahren nach einem der vorhergehenden Ansprüche, **wobei** mindestens einige der mikrooptischen Elemente (4) so geformt sind, dass sie einen Einfallwinkel von durch die vorgesehene Lichtquelle (3) bereitgestellten Strahlen verringern.

4. Verfahren nach einem der vorhergehenden Ansprüche, **wobei** sich die Lichteinkoppelfläche (1) an einem Ende des Lichtleiters (2) befindet, wobei eine Achse (5) des Lichtleiters (2) durch die Lichteinkoppelfläche (1) verläuft.

5. Verfahren nach einem der vorhergehenden Ansprüche, **wobei** die Lichteinkoppelfläche (1) einen zentralen Teil und einen peripheren Teil aufweist, wobei sich die mikrooptischen Elemente (4) auf dem peripheren Teil befinden.

6. Verfahren nach einem der vorhergehenden Ansprüche, **wobei** das Umformen mindestens eines von den Folgenden umfasst: Erwärmen des die Lichteinkoppelfläche (1) bildenden Materials, Entfernen eines Teils des die Lichteinkoppelfläche (1) bildenden Materials, Drücken der Lichteinkoppelfläche (1) gegen einen geformten Einsatz.

7. Verfahren nach einem der vorhergehenden Ansprüche, **wobei** der Parameter der mindestens einen Lichtquelle (3) mindestens einen von den folgenden umfasst: einen beabsichtigten Abstand zwischen der Lichtquelle (3) und der Lichteinkoppelfläche (1), eine Lichtstärke der Lichtquelle (3), einen Abstrahlwinkel der Lichtquelle (3), einen Wirkungsgrad der Lichtquelle (3) und eine Größe der Lichtquelle (3) oder ihres lichtabstrahlenden Abschnitts.

8. Verfahren nach einem der vorhergehenden Ansprüche, **wobei** mindestens einige der mikrooptischen Elemente (4) mindestens eine unabhängig von einigen anderen mikrooptischen Elementen (4) bestimmte Eigenschaft aufweisen.

9. Verfahren nach einem der vorhergehenden Ansprüche, **wobei** die meisten der mikrooptischen Elemente (4) eine Länge und/oder eine Breite kleiner/gleich 100 Mikrometer aufweisen.

## Revendications

1. Procédé de modification d'une surface d'entrée de lumière (1) d'un guide de lumière (2) pour l'éclairage automobile, le procédé comprenant :
• Obtention d'un guide de lumière (2) présentant une surface d'entrée de lumière plane (1) ;
• Obtention d'au moins un paramètre d'une source de lumière (3) destinée à fournir de la lumière au guide de lumière (2) ; et
• Remodelage d'au moins une partie de la surface d'entrée de lumière (1) du guide de lumière (2) en dotant cette partie de surface d'éléments micro-optiques (4) ;
Sachant qu'au moins une caractéristique des éléments micro-optiques (4) est au moins partiellement basée sur ledit au moins un paramètre de la source de lumière (3) afin d'augmenter la quantité de lumière couplée dans le guide de lumière (2) et transportée par le guide de lumière (2) lorsque sa surface d'entrée de lumière (1) remodelée est éclairée par la source de lumière (3).

2. Procédé selon la revendication 1, **sachant qu**'au moins une caractéristique des éléments micro-optiques (4) est choisie parmi un ensemble comprenant : une forme des éléments micro-optiques (4), une taille des éléments micro-optiques (4), un emplacement des éléments micro-optiques (4) sur la surface d'entrée de lumière (1), un nombre d'éléments micro-optiques (4) et une orientation des éléments micro-optiques (4) ou de leurs parties.

3. Procédé selon l'une des revendications précédentes, **sachant qu**'au moins certains des éléments micro-optiques (4) sont formés de manière à réduire un angle d'incidence des rayons provenant de la source de lumière prévue (3).

4. Procédé selon l'une des revendications précédentes, **sachant que** la surface d'entrée de lumière (1) est située à une extrémité du guide de lumière (2), l'axe (5) du guide de lumière (2) passant par la surface d'entrée de lumière (1).

5. Procédé selon l'une des revendications précédentes, **sachant que** la surface d'entrée de lumière (1) comporte une partie centrale et une partie périphérique, les éléments micro-optiques (4) étant situés sur la partie périphérique.

6. Procédé selon l'une des revendications précédentes, **sachant que** le remodelage comprend au moins l'une des étapes suivantes : chauffage du matériau formant la surface d'entrée de lumière (1), retrait d'une partie du matériau formant la surface d'entrée de lumière (1), pression de la surface d'entrée de lumière (1) contre un insert profilé.

7. Procédé selon l'une des revendications précédentes, **sachant que** les paramètres de la source de lumière (3) au moins comprennent au moins l'un des éléments suivants : une distance prévue entre la source de lumière (3) et la surface d'entrée de lumière (1), une intensité lumineuse de la source de lumière (3), un angle de faisceau de la source de lumière (3), un rendement de la source de lumière (3) et une taille de la source de lumière (3) ou de sa partie émettant la lumière.

8. Procédé selon l'une des revendications précédentes, **sachant qu**'au moins certains des éléments micro-optiques (4) présentent au moins une caractéristique déterminée indépendamment de certains autres éléments micro-optiques (4).

9. Procédé selon l'une des revendications précédentes, **sachant que** la plupart des éléments micro-optiques (4) ont une longueur et/ou une largeur inférieure ou égale à 100 microns.
